# EUROPEAN PATENT SPECIFICATION

(11) **EP 2 551 468 B1**
(45) Date of publication and mention of the grant of the patent: **25.11.2020**
(21) Application number: 12177520.9
(22) Date of filing: 23.07.2012
(51) Int. Cl.: F01D 11/24

(54) **Blade outer air seal assembly with passage joined cavities and corresponding operating method**
Anordnung einer Schaufelspitzendichtung mit durchgangsverbundenen Hohlräumen und zugehöriges Betriebsverfahren
Agencement de joint d'extrémité d'aube avec cavités reliées par un passage et procédé d'exploitation associé

(30) Priority: 26.07.2011 US 201113190559
(43) Date of publication of application: 30.01.2013
(73) Proprietor: United Technologies Corporation, Farmington, CT 06032 (US)
(72) Inventor: Thibodeau, Anne-Marie B., Winslow, ME 04901 (US)
(74) Representative: Dehns

(56) References cited:
- EP-A1- 1 990 507
- US-A- 4 280 792
- US-A- 4 679 981
- US-A- 5 993 150
- US-A- 6 120 249
- US-A1- 2005 089 396

## Description

### TECHNICAL FIELD

The present application relates to a blade outer air seal (BOAS) and more particularly to a multi-cavity blade outer air seal (BOAS) in a gas turbine engine.

### BACKGROUND

Gas turbine engines generally include fan, compressor, combustor and turbine sections along an engine axis of rotation. The fan, compressor, and turbine sections each include a series of stator and rotor blade assemblies. A rotor and an axially adjacent array of stator assemblies may be referred to as a stage. Each stator vane assembly increases efficiency through the direction of core gas flow into or out of the rotor assemblies.

An outer case, including a multiple of blade outer air seals (BOAS), provides an outer radial flow path boundary. A multiple of BOAS are typically provided to accommodate thermal and dynamic variation typical in a high pressure turbine (HPT) section of the gas turbine engine. The BOAS are subjected to relatively high temperatures and receive a secondary cooling airflow for temperature control. The secondary cooling airflow is communicated into the BOAS then through cooling channels within the BOAS for temperature control.

US 4679981 discloses a gas turbine engine having the features of the preamble of claim 1. US 5993150 A discloses a cooled turbine shroud. EP 1990507 A1 discloses an impingement cooled turbine shroud. Other cooled shrouds are disclosed in US 2005/0089396 A1 and US 4280792 A2.

### SUMMARY

From a first aspect, the invention provides a gas turbine engine as set forth in claim 1. From a second aspect, the invention provides a method of communicating a secondary cooling airflow within a gas turbine engine as set forth in claim 5.

### BRIEF DESCRIPTION OF THE DRAWINGS

The various features and advantages of this invention will become apparent to those skilled in the art from the following detailed description of the disclosed non-limiting embodiment. The drawings that accompany the detailed description can be briefly described as follows:
Figure 1 is a general sectional diagrammatic view of a gas turbine engine HPT section;
Figure 2 is a perspective exploded view of a BOAS segment; and
Figure 3 is a chart of pressures within the BOAS and axial distance from a leading edge thereof;

### DETAILED DESCRIPTION OF THE DISCLOSED EMBODIMENT

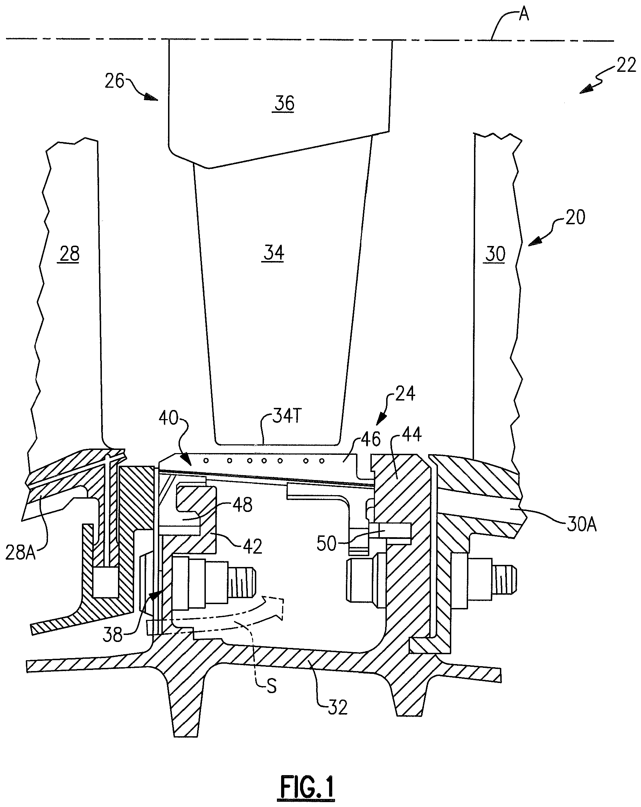

Figure 1 schematically illustrates a gas turbine engine 20, illustrated partially herein as a High Pressure Turbine (HPT) section 22 disposed along a common engine longitudinal axis A. The engine 20 includes a Blade Outer Air Seal (BOAS) assembly 24 to provide an outer core gas path seal for the turbine section 22. It should be understood that although a BOAS assembly for a HPT of a gas turbine engine is disclosed in the illustrated embodiment, the BOAS assembly may be utilized in any section of a gas turbine engine. The BOAS segment may find beneficial use in many industries including aerospace, industrial, electricity generation, naval propulsion, pumping sets for gas and oil transmission, aircraft propulsion, vehicle engines, and stationary power plants.

The HPT section 22 generally includes a rotor assembly 26 disposed between forward and aft stationary vane assemblies 28, 30. Outer vane supports 28A, 30A attach the respective vane assemblies to an engine case 32 (illustrated schematically). The rotor assembly 26 generally includes a multiple of airfoils 34 circumferentially disposed around a disk 36. The distal end of each airfoil 34 may be referred to as an airfoil tip 34T which rides adjacent to the BOAS assembly 24.

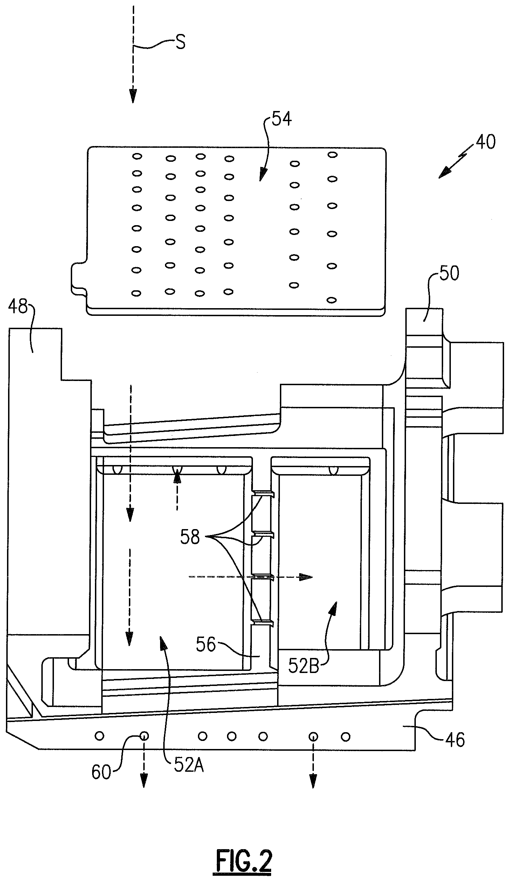

The BOAS assembly 24 is generally disposed in an annulus radially between the engine case 32 and the airfoil tips 34T. The BOAS assembly 24 generally includes a blade outer air seal (BOAS) support 38 and a multiple of blade outer air seal (BOAS) segments 40 mountable thereto (also see Figure 2). The BOAS support 38 is mounted within the engine case 32 to define forward and aft flanges 42, 44 to receive the BOAS segments 40. The forward flanges 42 and the aft flanges 44 may be circumferentially segmented to receive the BOAS segments 40 in a circumferentially rotated and locked arrangement as generally understood. It should be understood that various interfaces and BOAS assemblies may alternatively be provided.

Each BOAS segment 40 includes a body 46 which defines a forward interface 48 and an aft interface 50. The forward interface 48 and the aft interface 50 respectively engage the flanges 42, 44 to secure each individual BOAS segment 40 thereto.

With reference to Figure 2, each BOAS segment 40 includes at least two cavities 52A, 52B to receive a secondary cooling airflow S. Each cavity 52A, 52B may be formed through, for example, an investment casting process then closed by a single impingement plate 54.

In the disclosed non-limiting embodiment, the cavity 52A is axially forward of cavity 52B but separated therefrom by a circumferential rib 56. That is, the circumferential rib 56 essentially surrounds the engine longitudinal axis A. Secondary cooling air S flows through the plate 54, impinges in the BOAS cavities 52A, 52B then flows out to the core gaspath flow through a multiple of edge holes 60. The circumferential rib 56 and plate 54 isolates the secondary cooling air allocated to a specific cavity 52A, 52B. It should be understood that various alternative cavity and passageway arrangements may be provided that lie within the scope of the appended claims.

The circumferential rib 56 includes at least two passages 58 which provides for secondary cooling air S to flow aftward from the forward cavity 52A to the aft cavity 52B. It should be understood that the term "passage" as utilized herein may include various slots, apertures, openings, holes and paths. In the disclosed non-limiting embodiment, three passages 58 are provided which removes approximately 3.5% of the rib 56. Since the percentage of material removed is minimal and since the removal of the material is from a circumferential member rather than an axial member, minimal, if any, structural impact is experienced by the BOAS segment 40.

The passages 58 allow some of the forward cavity 52A secondary cooling air S to be reused in the aft cavity 52B which results in lower temperatures and relatively lower cooling flow requirements for the BOAS segment 40. The passages 58 also permit at least some reuse of the secondary cooling air S with the single plate 54 which needs not be welded to the rib 56. The single plate 54 facilitates manufacture with minimal brazing filler metal (BFM) and minimizes undesired leakage.

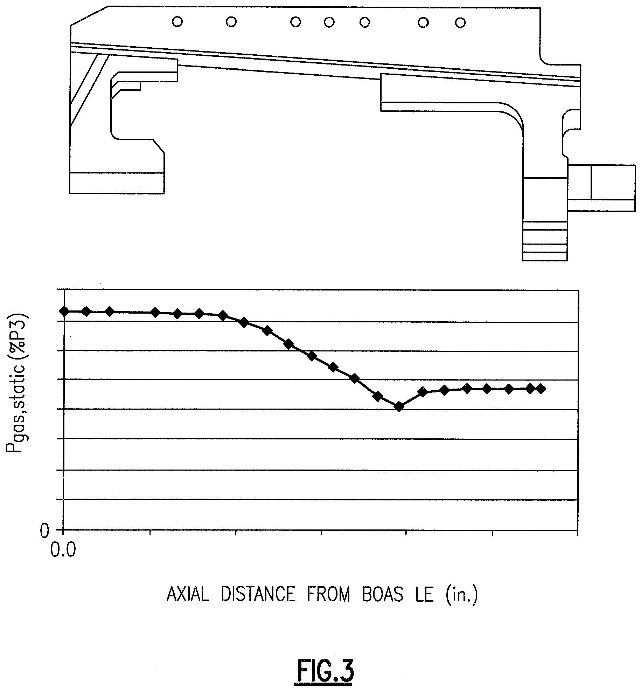

In the disclosed non-limiting embodiment, the secondary cooling air S gaspath pressure within the BOAS segment 40 is lower axially aft of airfoil tips 34T (Figure 1). The forward cavity 52A thus has a somewhat higher static pressure than the aft cavity 52B (Figure 3) due to the direction of primary core flow. The higher static pressure in cavity 52A also results in increased axial crossflow heat transfer coefficient (Hc) in the forward cavity 52A which results in, for example, lower temperatures, and, likewise, longer operational life of the BOAS segment 40 as represented in the chart below:

| | Related Art 2-Cavity Total Flow | 2-Cavity with 3 passages - Total Flow |
|---|---|---|
| %Wae | 0.69% | 0.59% |
| Tmet, mx (max BOAS temperature) | 1182° C (2159° F) | 1177° C (2151° F) |
| Nominal/min back flow margin (BFM) | 13.2% / 5% | 12.6% |

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present invention.

The foregoing description is exemplary rather than defined by the limitations within. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A gas turbine engine comprising a blade outer air seal assembly (24) said assembly comprising:
a body (46) which defines a first cavity (52A) separated from a second cavity (52B) by a circumferential rib (56),
an impingement plate (54) which encloses said first cavity (52A) and said second cavity (52B), said impingement plate (54) comprising a plurality of impingement holes formed therethrough, said impingement holes opening into both said first cavity (54A) and said second cavity (52B); **characterized in that**:
said circumferential rib (56) includes more than one passage (58) which provide communication between said first cavity (52A) and said second cavity (52B), wherein said more than one passage (58) remove approximately 3.5% of the material of said rib (56).

2. The gas turbine engine as recited in claim 1, wherein said assembly comprises three passages (58).

3. The gas turbine engine as recited in claim 1 or 2, wherein said first cavity is a forward cavity (52A) and said second cavity (52B) is axially aft of said first cavity.

4. The gas turbine engine as recited in any preceding claim, wherein said body (46) comprises a multiple of edge holes (60) communicating with said forward cavity (52A) and said second cavity (52B).

5. A method of communicating a secondary cooling airflow (S) within a gas turbine engine comprising:
segregating a first cavity (52A) from a second cavity (52B) by a circumferential rib (56), the circumferential rib (56) having more than one passage (58);
communicating the secondary cooling airflow (S) between the first cavity (52A) and the second cavity (52B) through the at least two passages (58); wherein said more than one passage (58) remove approximately 3.5% of the material of said rib (56); and
communicating the secondary cooling airflow (S) into the first cavity (52A) and the second cavity (52B) through a single impingement plate (54), said impingement plate (54) comprising a plurality of impingement holes formed therethrough, said impingement holes opening into both said first cavity (54A) and said second cavity (52B).

## Patentansprüche

1. Gasturbinentriebwerk, das eine Baugruppe (24) einer äußeren Laufschaufelluftdichtung umfasst, wobei die Baugruppe Folgendes umfasst:
einen Körper (46), der einen ersten Hohlraum (52A) definiert, der durch eine umlaufende Rippe (56) von einem zweiten Hohlraum (52B) getrennt ist,
eine Aufprallplatte (54), die den ersten Hohlraum (52A) und den zweiten Hohlraum (52B) umschließt, wobei die Aufprallplatte (54) eine Vielzahl von Pralllöchern umfasst, die dort hindurch ausgebildet sind, wobei die Pralllöcher sich sowohl in den ersten Hohlraum (54A) als auch in den zweiten Hohlraum (52B) öffnen; **dadurch gekennzeichnet, dass**:
die umlaufende Rippe (56) Folgendes beinhaltet: mehr als einen Durchgang (58), die eine Kommunikation zwischen dem ersten Hohlraum (52A) und dem zweiten Hohlraum (52B) bereitstellen;
wobei der mehr als eine Durchgang (58) Folgendes entfernen: ungefähr 3,5 % des Materials der Rippe (56).

2. Gasturbinentriebwerk nach Anspruch 1, wobei die Baugruppe drei Durchgänge (58) umfasst.

3. Gasturbinentriebwerk nach Anspruch 1 oder 2, wobei der erste Hohlraum ein vorderer Hohlraum (52A) ist und der zweite Hohlraum (52B) sich axial hinter dem ersten Hohlraum befindet.

4. Gasturbinentriebwerk nach einem der vorhergehenden Ansprüche, wobei der Körper (46) eine Mehrzahl von Kantenlöchern (60) umfasst, die mit dem vorderen Hohlraum (52A) und dem zweiten Hohlraum (52B) kommunizieren.

5. Verfahren zum Kommunizieren einer sekundären Kühlluftströmung (S) innerhalb eines Gasturbinentriebwerks, das Folgendes umfasst:
Segregieren eines ersten Hohlraums (52A) von einem zweiten Hohlraum (52B) durch eine umlaufende Rippe (56), wobei die umlaufende Rippe (56) Folgendes aufweist: mehr als einen Durchgang (58);
Kommunizieren der sekundären Kühlluftströmung (S) zwischen dem ersten Hohlraum (52A) und dem zweiten Hohlraum (52B) durch die mindestens zwei Durchgänge (58);
wobei der mehr als eine Durchgang (58) Folgendes entfernen:
ungefähr 3,5 % des Materials der Rippe (56); und
Kommunizieren der sekundären Kühlluftströmung (S) in den ersten Hohlraum (52A) und den zweiten Hohlraum (52B) durch eine einzelne Aufprallplatte (54), wobei die Aufprallplatte (54) eine Vielzahl von Pralllöchern umfasst, die dort hindurch ausgebildet sind, wobei die Pralllöcher sich sowohl in den ersten Hohlraum (54A) als auch in den zweiten Hohlraum (52B) öffnen.

## Revendications

1. Moteur à turbine à gaz comprenant un agencement de joint d'extrémité d'aube (24), ledit agencement comprenant :
un corps (46) qui définit une première cavité (52A) séparée d'une seconde cavité (52B) par une nervure circonférentielle (56),
une plaque d'impact (54) qui renferme ladite première cavité (52A) et ladite seconde cavité (52B), ladite plaque d'impact (54) comprenant une pluralité de trous d'impact formés à travers celle-ci, lesdits trous d'impact débouchant à la fois dans ladite première cavité (54A) et dans ladite seconde cavité (52B) ; **caractérisé en ce que**
ladite nervure circonférentielle (56) comporte plusieurs passages (58) qui assurent la communication entre ladite première cavité (52A) et ladite seconde cavité (52B), dans lequel
lesdits plusieurs passages (58) éliminent approximativement 3,5 % du matériau de ladite nervure (56).

2. Moteur à turbine à gaz selon la revendication 1, dans lequel ledit agencement comprend trois passages (58).

3. Moteur à turbine à gaz selon la revendication 1 ou 2, dans lequel ladite première cavité est une cavité avant (52A) et ladite seconde cavité (52B) est axialement en arrière de ladite première cavité.

4. Moteur à turbine à gaz selon une quelconque revendication précédente, dans lequel ledit corps (46) comprend une pluralité de trous périphériques (60) communicant avec ladite cavité avant (52A) et ladite seconde cavité (52B).

5. Procédé de communication d'un écoulement d'air de refroidissement secondaire (S) à l'intérieur d'un moteur à turbine à gaz comprenant :
la séparation d'une première cavité (52A) d'une seconde cavité (52B) par une nervure circonférentielle (56), la nervure circonférentielle (56) ayant plusieurs passages (58) ;
la communication de l'écoulement d'air de refroidissement secondaire (S) entre la première cavité (52A) et la seconde cavité (52B) à travers les au moins deux passages (58) ;
dans lequel lesdits plusieurs passages (58) éliminent approximativement 3,5 % du matériau de ladite nervure (56) ; et
la communication de l'écoulement d'air de refroidissement secondaire (S) dans la première cavité (52A) et la seconde cavité (52B) à travers une unique plaque d'impact (54), ladite plaque d'impact (54) comprenant une pluralité de trous d'impact formés à travers celle-ci, lesdits trous d'impact débouchant à la fois dans ladite première cavité (54A) et dans ladite seconde cavité (52B).
